# EUROPEAN PATENT APPLICATION

(11) **EP 4 708 621 A1**
(43) Date of publication of application: **11.03.2026**
(21) Application number: 25800321.9
(22) Date of filing: 30.04.2025
(51) Int. Cl.: H02J 7/00, H02J 3/32

(54) **BUS VOLTAGE MODULATION METHOD FOR DYNAMICALLY RECONFIGURABLE SERIES-CONNECTED BATTERY SYSTEM**

(30) Priority: 03.07.2024 CN 202410881978
(71) Applicant: IBATTERYCLOUD CO., LTD., Yantai, Shandong 264000 (CN)
(72) Inventor: CI, Song, Yantai, Shandong 264000 (CN); ZHANG, Ming, Yantai, Shandong 264000 (CN); WANG, Hongjun, Yantai, Shandong 264000 (CN); LI, Kai, Yantai, Shandong 264000 (CN); WANG, Weitu, Yantai, Shandong 264000 (CN)
(74) Representative: Chung, Hoi Kan
(86) International application number: PCT/CN2025/092244
(87) International publication number: WO 2026/007519

(57) **Abstract**

The present disclosure discloses a bus voltage modulation method for a series dynamic reconfiguration battery system, and belongs to the technical field of energy storage for new energy power systems, comprising: numbering all battery modules as i, collecting a voltage value of each battery module, and arranging in a descending order according to magnitudes of the voltage values; selecting a battery module corresponding to the highest voltage value; determining whether the serial number i of the selected battery module is less than a total number N of series battery modules, if a determination result is YES, accumulating voltage values corresponding to the selected battery modules, and determining whether a voltage accumulation value of the battery modules is within a preset range; and performing an i++ operation according to the voltage accumulation value of the battery modules, and repeating the above content until an output bus voltage meets requirements for the preset range. A dynamic reconfiguration battery system based on a software-defined technology of the present disclosure can reconstruct and output a desired power bus voltage according to voltages of respective battery modules in real time to meet the requirements for the output power bus voltage.

## Description

### TECHNICAL FIELD

The present disclosure relates to the technical field of energy storage for new energy power systems, in particular to a bus voltage modulation method for a series dynamic reconfiguration battery system.

### BACKGROUND

To meet the output requirements of reserve integration, current base station battery energy storage systems are generally equipped with DC-DC converter blocks. A DC-DC converter refers to a device for converting electrical energy of one voltage value into electrical energy of another voltage value in a DC circuit. A DC-DC module is costly, has high requirements for battery consistency, requires batteries of the same type, is high in construction and management costs, and has low efficiency.

### SUMMARY

The present disclosure addresses the shortcomings of the prior art and provides a bus voltage modulation method for a series dynamic reconfiguration battery system.

To solve the above technical problem, the present disclosure adopts the following technical solution:
A bus voltage modulation method for a series dynamic reconfiguration battery system, including the following steps:
S1: starting battery module selection, where all battery modules are numbered as i based on bus requirements, a voltage value of each battery module is collected, all battery modules are arranged in a descending order by magnitudes of voltage values, and a battery module corresponding to the highest voltage value is numbered as 0, sequentially numbered as i=0, i=1, i=2... by the magnitudes of voltage values;
S2: selecting the battery module corresponding to the highest voltage value, i.e., i=0;
S3: determining whether a serial number i of the battery module selected is less than a total number N of series battery modules, and if a determination result is YES, accumulating voltage values corresponding to the battery modules selected, and determining whether a voltage accumulation value Σ *vi* of the battery modules is within a preset range;
S4: performing an i++ operation according to the voltage accumulation value Σ *vi* of the battery modules, and repeating S2-S3 until an output bus voltage meets requirements for the preset range,
further, in step S3, determining steps for determining whether the voltage accumulation value Σ *vi* of the battery modules is within the preset range specifically include:
   S31: comparing the voltage accumulation value Σ *vi* of the battery modules with a bus voltage modulation output lower limit value V1, determining whether the voltage accumulation value Σ *vi* of the battery modules is smaller than the bus voltage modulation output lower limit value V1, and skipping to S32 if a determination result is YES; otherwise, skipping to S33;
   S32: based on a result determining to be YES in S31, placing the battery module selected at this time into a switch-on group, accumulating a voltage value corresponding to the battery module into the voltage accumulation value, then performing an i++ operation, and repeating steps S2-S3;
   S33: comparing the voltage accumulation value Σ *vi* of the battery modules with a bus voltage modulation output upper limit value V2, determining whether the voltage accumulation value Σ *vi* of the battery modules is greater than the bus voltage modulation output upper limit value V2, and skipping to S34 if a determination result is YES; if the determination result is NO, issuing commands by the switch-on group and a switch bypass group, completing a serial reconfiguration action, and ending the battery module selection;
   S34: based on a result determining to be YES in S33, placing the battery module accumulated at this time into the switch bypass group, not accumulating the voltage value corresponding to the battery module selected at this time into the voltage accumulation value, performing an i++ operation, and repeating S2-S3;
   further, in S3, whether the serial number i of the battery module selected is smaller than the total number N of series battery modules is determined, and if a determination result is NO, skipping to step S5;
   S5: determining whether selected combinations of all the battery modules are all attempted, if it is determined to be YES, skipping to S6; if it is determined to be NO, shielding one main battery module, and repeating S2-S4; and
   S6: keeping a last selection result, or disconnecting network cards of all battery modules, and starting a mechanism for actively generating a voltage difference between the battery modules.

Further, specific steps of starting the mechanism for actively generating the voltage difference between the battery modules in S6 include:
S61: collecting, by an energy control unit, voltage values of n main battery modules, and comparing all the voltage values to obtain the highest voltage value, where the battery modules include n battery modules and m dummy battery modules;
S62: performing a difference calculation of the highest voltage value and the rest of the voltage values in a main circuit to obtain the voltage difference; if the voltage difference is greater than a preset threshold value, reconstructing n-1 main battery modules in the main circuit in a serial direction; and if the voltage difference is not greater than the preset threshold value, forcibly connecting in the main battery module q corresponding to the highest voltage value, and selecting n-q-1 main battery modules among the rest of the main battery modules n-q for discharging.

Further, specific steps of turning on or bypassing the battery modules include:
S621: generating, by an energy control unit, control commands according to bus voltage requirements, and sending the control commands to an energy exchange unit; and
S622: using the energy exchange unit as a bridging unit of a power loop of each battery module for receiving the control commands sent by the energy control unit and controlling states of individual battery modules corresponding thereto according to the received control commands, the states including OFF, isolated, ON.

Further, the control commands include 0, 1, 2, where
0 represents a battery module turn-off command, and when the energy exchange unit receives the command, the battery module corresponding to the energy control unit is controlled to be turned off, at which time the power loop corresponding to the battery module is turned off;
1 represents a battery module turn-on command, and when the energy exchange unit receives the command, the battery module corresponding to the energy control unit is controlled to be turned on, at which time the power loop corresponding to the battery module is turned on; and
2 represents a battery module isolation command, and when the energy exchange unit receives the command, the battery module corresponding to the energy control unit is controlled to be bypassed, and the power loop corresponding to the battery module is turned on.

Further, the generation of the control commands is based on real-time calculation of a reconstruction cycle.

Further, the bus voltage modulation output lower limit value V1 is 57.4 V, and the bus voltage modulation output upper limit value V2 is 58.4 V.

Further, the battery modules include at least two different types of battery modules.

The present disclosure has at least the following beneficial effects:
In the present disclosure, according to the requirements for a bus voltage, during discharging, a voltage value of each battery module is collected, the battery modules are arranged in a descending order according to magnitudes of the voltage values, the battery module corresponding to the highest voltage value is preferably selected for determination, and the battery module corresponding to the voltage value can be determined to be placed into a switch-on group or a switch bypass group by comparing the voltage value with a preset range; according to a determination result, whether to perform an i++ operation is determined; and a combination of battery modules conforming to the bus voltage is found by accumulating a plurality of battery modules so as to conform to the output bus voltage requirement;
A dynamic reconfiguration battery system based on a software-defined technology of the present disclosure can reconstruct and output a desired power bus voltage according to voltages of respective battery modules in real time to meet the requirements for the output power bus voltage.

A dynamically reconfigurable battery system based on a software-defined technology can optimize intra-system battery management, equalize batteries, guarantee battery safety, improve battery utilization, and be compatible with multiple types of batteries. It is widely applied to step battery utilization and base station reserve storage integrated systems.

### BRIEF DESCRIPTION OF THE DRAWINGS

FIG. 1 is a schematic flow diagram of the present disclosure;
FIG. 2 is a schematic diagram of bus modulation output during discharging according to the present disclosure; and
FIG. 3 is a schematic diagram of an energy exchange unit as a bridging unit of a battery module according to the present disclosure.

### DETAILED DESCRIPTION OF THE EMBODIMENTS

The principles and features of the present disclosure are described below with reference to all accompanying drawings, and the examples given are only used to explain the present disclosure and are not intended to limit the scope of the present disclosure.

Embodiments of the present disclosure disclose a bus voltage modulation method for a series dynamic reconfiguration battery system.

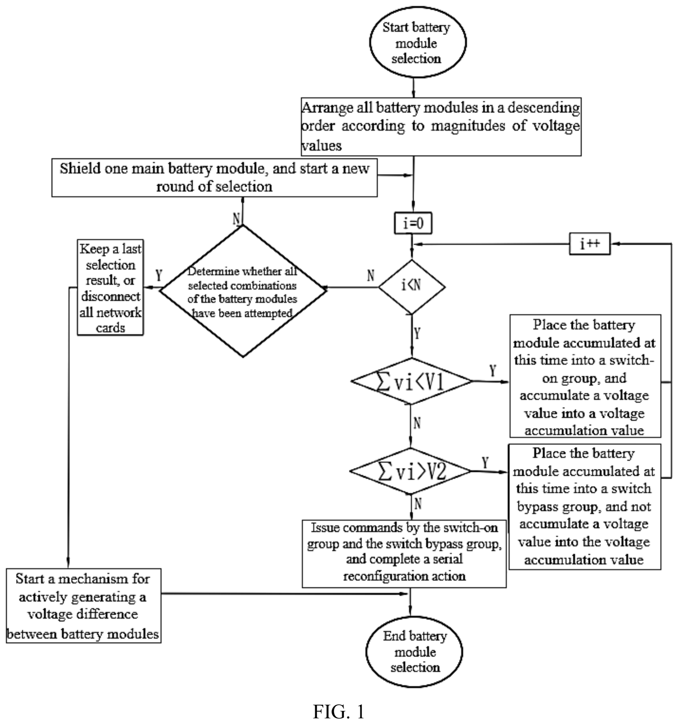

Referring to FIGs. 1-3, the bus voltage modulation method for the series dynamic reconfiguration battery system includes the following steps:
S1: starting battery module selection, where all battery modules are numbered as i based on bus requirements, a voltage value of each battery module is collected, all battery modules are arranged in a descending order by magnitudes of voltage values, and a battery module corresponding to the highest voltage value is numbered as 0, sequentially numbered as i=0, i=1, i=2... by the magnitudes of voltage values;
S2: selecting the battery module corresponding to the highest voltage value, i.e., i=0;
S3: determining whether a serial number i of the battery module selected is less than a total number N of series battery modules, and if a determination result is YES, accumulating voltage values corresponding to the battery modules selected, and determining whether a voltage accumulation value Σ *vi* of the battery modules is within a preset range;
S4: performing an i++ operation according to the voltage accumulation value Σ *vi* of the battery modules, and repeating S2-S3 until an output bus voltage meets requirements for the preset range, where the calculated accumulation value of the battery modules is the output bus voltage.

Specifically, all the collected voltage values are arranged in a descending order according to the magnitudes of the voltage values, each battery module is numbered i, and the battery module corresponding to the highest voltage value is numbered 0, and so on, i=0, i=1, i=2,...; at the beginning of battery module selection, a battery module numbered 0 is selected, that is, the battery module corresponding to the highest voltage value is preferably selected and determined first, that is, whether the battery module numbered 0 is smaller than a total number N of battery modules, if a determination result is YES, following operations are performed, i.e., a voltage accumulation value Σ *vi* is determined, an i++ operation is selected to be performed according to a determination result, and S2-S3 are repeated in sequence until an output bus voltage meets the requirements for the preset range, i.e., a combination of battery modules is found to meet the requirements for the output bus voltage.

It should be emphasized that, in this embodiment, two different types of battery modules can be used, and the voltages of the two types of battery modules are different.

Further, in S3, determining steps for determining whether the voltage accumulation value of the battery modules is within the preset range specifically include:
S31: comparing the voltage accumulation value Σ *vi* of the battery modules with a bus voltage modulation output lower limit value V1, determining whether the voltage accumulation value Σ *vi* of the battery modules is smaller than the bus voltage modulation output lower limit value V1, and skipping to S32 if a determination result is YES; otherwise, skipping to S33;
S32: based on a result determining to be YES in S31, placing the battery module selected at this time into a switch-on group, accumulating a voltage value corresponding to the battery module into the voltage accumulation value, then performing an i++ operation, and repeating S2-S3;
S33: comparing the voltage accumulation value Σ *vi* of the battery modules with a bus voltage modulation output upper limit value V2, determining whether the voltage accumulation value Σ *vi* of the battery modules is greater than the bus voltage modulation output upper limit value V2, skipping to step S34 if a determination result is YES; if the determination result is NO, issuing commands by the switch-on group and a switch bypass group, completing a serial reconfiguration action, and ending the battery module selection; and
S34: based on a result determining to be YES in S33, placing the battery module accumulated at this time into the switch bypass group, not accumulating the voltage value corresponding to the battery module selected at this time into the accumulation value, performing an i++ operation, and repeating S2-S3.

Specifically, the bus voltage modulation output lower limit value V1 is equal to 57.4 V, and the bus voltage modulation output upper limit value V2 is equal to 58.4 V. The voltage accumulation value of the battery modules is compared with V1, if the voltage accumulation value Σ *vi* < V1, the battery module selected at this time is placed into the switch-on group, and the voltage value corresponding to the battery module is accumulated into the voltage accumulation value, it is equivalent that the battery module is labeled, other battery modules are continued to be selected for determination, i.e., i++ calculation is performed, and S2-S3 are repeated to select a plurality of battery modules to be combined.

If the voltage accumulation value Σ *vi* is not greater than V1, skip to S33, i.e., the voltage accumulation value Σ *vi* is compared with the bus voltage modulation output upper limit value V2, if Σ *vi* > V2, the battery module accumulated (selected) at this time is placed into the switch bypass group, the voltage value corresponding to the battery module selected at this time is not accumulated into the voltage accumulation value, i.e., the battery module selected at this time is invalid (not meeting requirements), then the i++ operation is performed to select a next battery module, and S2-S3 are repeated to select a combination of battery modules meeting the requirements.

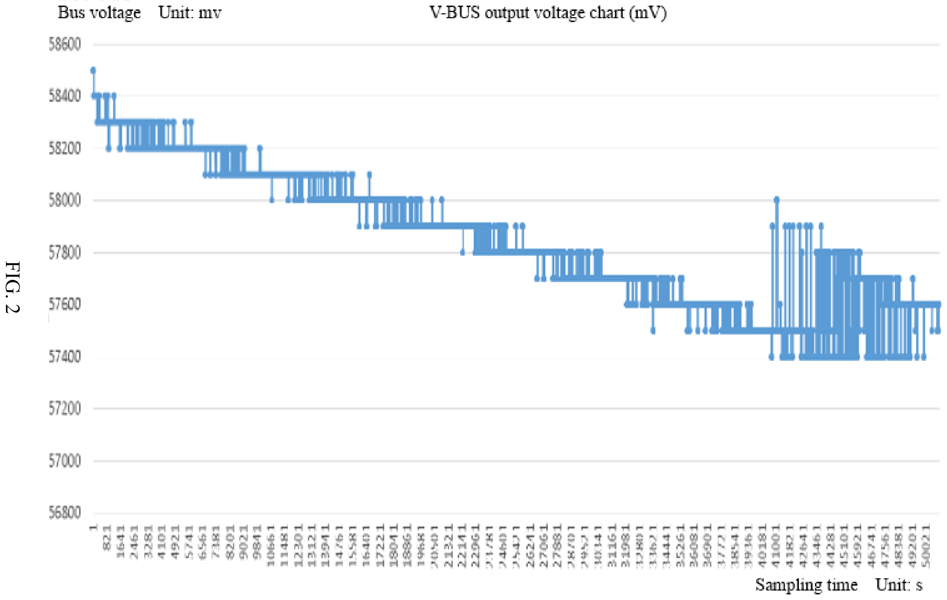

If Σ *vi* is not greater than V2, it indicates that the selected battery modules meet the requirements, the switch-on group and the switch bypass group issue commands, a serial reconfiguration action is completed, and the battery module selection is ended. The output modulated voltage is 57.4 V-58.4 V, as shown in FIG. 2.
further, in S3, whether the serial number i of the battery module selected is smaller than the total number N of series battery modules is determined, and if a determination result is NO, skipping to step S5;
S5: determining whether selected combinations of all the battery modules are all attempted, if it is determined to be YES, skipping to step S6; if it is determined to be NO, shielding one main battery module, and repeating steps S2-S4; and
S6: keeping a last selection result, or disconnecting network cards of all battery modules, and starting a mechanism for actively generating a voltage difference between the battery modules.

Specifically, whether selected combinations of all battery modules are all attempted is determined in S5, which can be understood as two cases:

The first case is that no battery module is placed into the switch bypass group, the voltage accumulation value is determined in all the battery modules, and a combination of battery modules meeting the requirements is still not found; in this case, all the battery modules in step S5 have been attempted to be combined, it is the case determined to be YES in step S5, if it is determined to be YES, the last selected result is kept, or all network cards of the battery modules are disconnected, i.e., all the battery modules are not turned on, and then a mechanism for actively generating the voltage difference between the battery modules is started to select the combination of battery modules meeting the requirement again, i.e., skipping to step S6.

The second case is that there are battery modules placed into the switch bypass group, the selected combinations in step S5 are not all attempted in this case, i.e., it is the case determined to be NO in step S5, and if a determination result is NO, one main battery module is shielded, a new round of selection is started, i.e., selection is performed again starting from i=1. It is to be noted that when one main battery module is shielded, each main battery module may be shielded once, with a main focus on attempting the combinations until the combination meeting the requirements is found.

Further, specific steps of starting the mechanism for actively generating the voltage difference between the battery modules in S6 include:
S61: collecting, by an energy control unit, voltage values of n main battery modules, and comparing all the voltage values to obtain the highest voltage value; and
S62: performing a difference calculation of the highest voltage value and the rest of the voltage values in a main circuit to obtain the voltage difference; if the voltage difference is greater than a threshold value, reconstructing n-1 battery modules in the main circuit in a serial direction; and if the voltage difference is not greater than the threshold value, forcibly connecting in the main battery module q corresponding to the highest voltage value, and selecting n-q-1 main battery modules among the rest of the main battery modules n-q for discharging.

Specifically, in this embodiment, the battery module includes n main battery modules and m dummy battery modules, assuming that a number n of the main battery modules is set to be 5, a voltage of each of the main battery modules is 12 V, a number m of the dummy battery modules is set to be 5, a voltage of each of the dummy battery modules is 2 V, a voltage difference is obtained after calculating a difference value of the highest voltage value and the rest of the voltage values in the main circuit, and if the voltage difference is greater than a threshold value, 4 main battery modules are selected among the 5 main battery modules in a serial direction for reconstruction; and if the voltage difference is not greater than the threshold value, the main battery module corresponding to the highest voltage value is forcibly connected in, which is set to be q, and 3 main battery modules among the remaining 4 main battery modules are selected for discharging. During discharging, 4 main battery modules corresponding to the highest voltage values + 5 dummy battery modules are connected into the system, which ensures that most of the battery modules can be reconfigured in series and discharging is balanced.

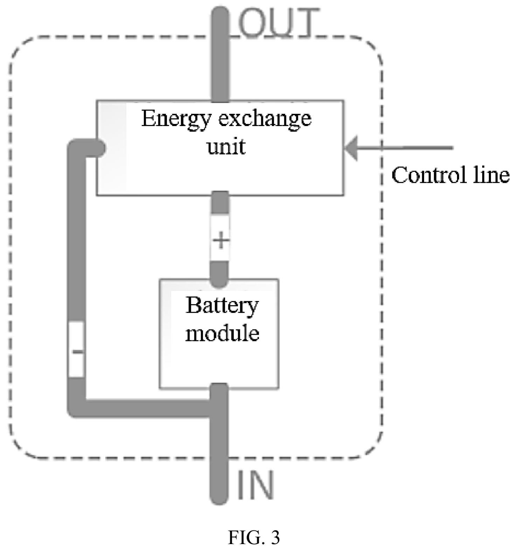

Further, specific steps of turning on or bypassing the battery modules include:
S621: generating, by an energy control unit, control commands according to bus voltage requirements, and sending the control commands to an energy exchange unit; and
S622: using the energy exchange unit as a bridging unit of a power loop of each battery module for receiving the control commands sent by the energy control unit and controlling states of individual battery modules corresponding thereto according to the received control commands, the states including OFF, isolated, ON. FIG. 3 is a schematic diagram of an energy exchange unit as a bridging unit for a power loop of each battery module.

The generation of the control commands is based on real-time calculation of a reconstruction cycle, and the reconstruction cycle is up to hundred milliseconds as fast as possible. The control commands include 0, 1, 2; where
0 represents a battery module turn-off command, and when the energy exchange unit receives the command, the battery module corresponding to the energy control unit is controlled to be turned off, at which time the power loop corresponding to the battery module is turned off;
1 represents a battery module turn-on command, and when the energy exchange unit receives the command, the battery module corresponding to the energy control unit is controlled to be turned on, at which time the power loop corresponding to the battery module is turned on; and
2 represents a battery module isolation command, and when the energy exchange unit receives the command, the battery module corresponding to the energy control unit is controlled to be bypassed, and the power loop corresponding to the battery module is turned on.

The above description is only a preferred embodiment of the present disclosure and is not intended to limit the present disclosure. Any modifications, equivalent substitutions, and improvements made within the spirit and principles of the present disclosure should be included within the scope of protection of the present disclosure.

## Claims

1. A bus voltage modulation method for a series dynamic reconfiguration battery system, **characterized by** comprising the following steps:
S1: starting battery module selection, wherein all battery modules are numbered as i based on bus requirements, a voltage value of each battery module is collected, all battery modules are arranged in a descending order by magnitudes of voltage values, and a battery module corresponding to the highest voltage value is numbered as 0, sequentially numbered as i=0, i=1, i=2... by the magnitudes of voltage values;
S2: selecting the battery module corresponding to the highest voltage value, i.e., i=0;
S3: determining whether a serial number i of the battery module selected is less than a total number N of series battery modules, and if a determination result is YES, accumulating voltage values corresponding to the battery modules selected, and determining whether a voltage accumulation value Σ *vi* of the battery modules is within a preset range;
S4: performing an i++ operation according to the voltage accumulation value Σ *vi* of the battery modules, and repeating S2-S3 until an output bus voltage meets requirements for the preset range,
wherein in S3, determining steps for determining whether the voltage accumulation value Σ *vi* of the battery modules is within the preset range specifically comprise:
S31: comparing the voltage accumulation value Σ *vi* of the battery modules with a bus voltage modulation output lower limit value V1, determining whether the voltage accumulation value Σ *vi* of the battery modules is smaller than the bus voltage modulation output lower limit value V1, and skipping to S32 if a determination result is YES; otherwise, skipping to S33;
S32: based on a result determining to be YES in S31, placing the battery module selected at this time into a switch-on group, accumulating a voltage value corresponding to the battery module into the voltage accumulation value, then performing an i++ operation, and repeating steps S2-S3;
S33: comparing the voltage accumulation value Σ *vi* of the battery modules with a bus voltage modulation output upper limit value V2, determining whether the voltage accumulation value Σ *vi* of the battery modules is greater than the bus voltage modulation output upper limit value V2, and skipping to S34 if a determination result is YES; if the determination result is NO, issuing commands by the switch-on group and a switch bypass group, completing a serial reconfiguration action, and ending the battery module selection;
S34: based on a result determining to be YES in S33, placing the battery module accumulated at this time into the switch bypass group, not accumulating the voltage value corresponding to the battery module selected at this time into the voltage accumulation value, performing an i++ operation, and repeating S2-S3,
wherein in S3, whether the serial number i of the battery module selected is smaller than the total number N of series battery modules is determined, and if a determination result is NO, skipping to S5;
S5: determining whether selected combinations of all the battery modules are all attempted, if it is determined to be YES, skipping to step S6; if it is determined to be NO, shielding one main battery module, and repeating S2-S4, wherein the battery modules comprise main battery modules and dummy battery modules; and
S6: keeping a last selection result, or disconnecting network cards of all battery modules, and starting a mechanism for actively generating a voltage difference between the battery modules.

2. The bus voltage modulation method for the series dynamic reconfiguration battery system according to claim 1, **characterized in that** specific steps for starting the mechanism for actively generating the voltage difference between the battery modules in S6 comprise:
S61: collecting, by an energy control unit, voltage values of n main battery modules, and comparing all the voltage values to obtain the highest voltage value; and
S62: performing a difference calculation of the highest voltage value and the rest of the voltage values in a main circuit to obtain the voltage difference; if the voltage difference is greater than a preset threshold value, reconstructing n-1 battery modules in the main circuit in a serial direction; and if the voltage difference is not greater than the preset threshold value, forcibly connecting in the main battery module q corresponding to the highest voltage value, and selecting n-q-1 main battery modules among the rest of the main battery modules n-q for discharging.

3. The bus voltage modulation method for the series dynamic reconfiguration battery system according to claim 1, **characterized in that** specific steps for switching on or bypassing the battery modules comprise:
S621: generating, by an energy control unit, control commands according to bus voltage requirements, and sending the control commands to an energy exchange unit; and
S622: using the energy exchange unit as a bridging unit of a power loop of each battery module for receiving the control commands sent by the energy control unit and controlling states of individual battery modules corresponding thereto according to the received control commands, the states including OFF, isolated, ON.

4. The bus voltage modulation method for the series dynamic reconfiguration battery system according to claim 3, **characterized in that** the control commands comprise 0, 1, 2, wherein
0 represents a battery module turn-off command, and when the energy exchange unit receives the command, the battery module corresponding to the energy control unit is controlled to be turned off, at which time the power loop corresponding to the battery module is turned off;
1 represents a battery module turn-on command, and when the energy exchange unit receives the command, the battery module corresponding to the energy control unit is controlled to be turned on, at which time the power loop corresponding to the battery module is turned on; and
2 represents a battery module isolation command, and when the energy exchange unit receives the command, the battery module corresponding to the energy control unit is controlled to be bypassed, and the power loop corresponding to the battery module is turned on.

5. The bus voltage modulation method for the series dynamic reconfiguration battery system according to claim 4, **characterized in that** the generation of the control commands is based on real-time calculation of a reconstruction cycle.

6. The bus voltage modulation method for the series dynamic reconfiguration battery system according to claim 1, **characterized in that** the bus voltage modulation output lower limit value V1 is 57.4 V, and the bus voltage modulation output upper limit value V2 is 58.4 V.

7. The bus voltage modulation method for the series dynamic reconfiguration battery system according to claim 1, **characterized in that** the battery modules comprise at least two different types of battery modules.
